Europäisches Patentamt

European Patent Office

Office européen des brevets

(19)

(11) Publication number: **0 153 141 B1**

(12)  **EUROPEAN PATENT SPECIFICATION**

(45) Date of publication of patent specification: **09.10.91**    (51) Int. Cl.⁵: **G11B 5/31**, H01F 10/26, H01F 10/30

(21) Application number: **85300942.1**

(22) Date of filing: **13.02.85**

(54) **Thin film magnetic heads.**

(30) Priority: **15.02.84 JP 27719/84**

(43) Date of publication of application:
**28.08.85 Bulletin 85/35**

(45) Publication of the grant of the patent:
**09.10.91 Bulletin 91/41**

(84) Designated Contracting States:
**DE FR GB NL SE**

(56) References cited:
**EP-A- 0 135 915**
**EP-A- 0 137 134**
**DE-A- 3 231 286**
**US-A- 4 316 964**

**PATENT ABSTRACTS OF JAPAN, vol. 7, no.
234 (P-230)[1379], 18th October 1983; & JP-
A-58 121 179 (KIYOUSERA K.K.) 19-07-1983**

(73) Proprietor: **SUMITOMO ELECTRIC INDUSTRIES
LIMITED
No. 15, Kitahama 5-chome, Higashi-ku
Osaka-shi, Osaka 541(JP)**

(72) Inventor: **Yamakawa, Akira c/o Itami Works
Sumitomo Electric Ind. Ltd. 1-1 Koyakita
1-chome
Itami-shi Hyogo(JP)**
Inventor: **Takeda, Yoshinobu c/o Osaka Works
Sumitomo Electric Ind. Ltd. 1-3 Shimaya
1-chome
Konohana-ku Osaka(JP)**
Inventor: **Kamijo, Eiji c/o Itami Works
Sumitomo Electric Ind. Ltd. 1-1 Koyakita
1-chome
Itami-shi Hyogo(JP)**

(74) Representative: **Cross, Rupert Edward Blount
et al
BOULT, WADE & TENNANT 27 Furnival Street
London EC4A 1PQ(GB)**

## Description

This invention relates to a thin film magnetic head and more particularly, it is concerned with a substrate for a thin film magnetic head which is suitable for recording density.

Generally, bulk heads composed of finely processed ferrite materials have been employed as magnetic heads for magnetic recording and reading. However, these magnetic heads have reached the limit in respect of the fine processing or machining and the permeability of ferrites to meet the lately rising demands for higher recording density and so thin film magnetic heads have been developed. Some thin film magnetic heads have been put to practical use as magnetic disc heads for large-sized computers, but their use is not general owing to difficulty in providing a suitable substrate material and also low yield. A thin film magnetic head is generally prepared by polishing the surface of a wafer of appropriate size e.g. 50 x 50 mm to give a polished surface with a roughness of 50 Å (5nm) and a smoothness of 1µ, coating the surface with an insulating film $Al_2O_3$ or $SiO_2$ of several microns in thickness, forming a predetermined magnetic circuit on the insulating film by sputtering or the like and then cutting out a single head. Therefore, for the mass production of such a thin film magnetic head, it is very important to find a suitably machinable substrate material having characteristics such as dimensional precision and surface smoothness in addition to the suitability for use in techniques requiring the formation of magnetic circuits and insulating films.

Up to the present time, ferrites and $Al_2O_3$-TiC ceramics have been proposed for substrate materials and, in particularly $Al_2O_3$-TiC ceramics have been considered most useful. However, in practice, these materials do not satisfy all of the requirements for machinability, mechanical properties and uniformity of structure, and particularly, their yield is comparatively low. In particular, ceramic materials having otherwise excellent mechanical properties and uniform structures are generally inferior in machinability so that they tend to exhibit chipping when they are sliced.

Several ceramics have been made in attempts to improve the mechanical properties and uniformity of structure. EP-A-0135915 (Art 54131) discloses a structure which contains 20-55 weight % of titanium carbide, the remaining substantial component being aluminium oxide. 5-60 mol % of the aluminium oxide in this composition may be replaced by zirconium oxide. In US-A-4316964 an $Al_2O_3/ZrO_2$ ceramic is disclosed wherein the $ZrO_2$ component occupies from 5-95% of the volume. In JP-A-58-121179 a magnetic slider is disclosed which is made of zirconia ceramics comprising at most 30 mol % of at least one of CaO, MgO, $Al_2O_3$ and $Y_2O_3$.

It is an object of embodiments of the present invention to provide a new substrate material suitable for use in thin film magnetic heads, and in particular to provide a novel ceramic substrate which has suitable mechanical properties as well as machinability.

It is a further object of embodiments of the present invention to provide a substrate material for a thin film magnetic head, in particular, which is resistant to chipping during slicing.

The present invention comprises a ceramic substrate for a think film magnetic head comprising 4 to 45% by volume of a component A, 55 to 96% by volume of a component B and at most 3% by volume of unavoidable impurities, wherein component A is at least one of, or a mixture or solid solution consisting of more than one of, a carbide, a nitride, a carbonitride, a carboxide, an oxynitride or a carboxynitride of a Group IVa, Va or Group VIa elements of the Periodic Table; and Component B is zirconia consisting of 70% by weight or more of tetragonal and/or cubic structure, at least one member from the group consisting of oxides of Group IIIa elements of the Periodic Table, and mixtures thereof being dissolved to form a solid solution with the zirconia.

The substrate material of the present invention has a suitable hardness as well as excellent mechanical strength and machinability and can thus be machined into a head with a high yield (i.e. a low failure rate), while that of the prior art, consisting predominantly of $Al_2O_3$, has a greater hardness but insufficient mechanical strength, thus being difficult to machine properly.

The $ZrO_2$ phase is the predominant phase in the ceramic composition of the present invention and is in a proportion of 55 to 96% by volume to the sintered compact thereof. If it is less than 55% by volume, the proportion of $ZrO_2$ will be too small to provide adequate mechanical strength and machinability, while if it is more than 96% by volume, the hardness will be insufficient and the substrate's electro-conductivity is lessened, making the substrate susceptible to the accumulation of static charge.

Impurities incorporated unaboidably during the process are in a proportion of at most 3% by volume.

As mentioned, the $ZrO_2$ phase is at least 70% by weight of tetragonal or cubic structure. If the proportion of monoclinic zirconia is increased,
micro-cracks tend to form during cooling after sintering, thus resulting in marked lowering of the mechanical strength.

Preparation of a magnetic thin film head may be performed by, for example, hot-pressing and sintering a ceramic composition as set forth above to obtain a compact, working the compact into a wafer, polishing the wafer surface using a diamond wheel, coating the polished surface with an insulating film (for example by vapour deposition of $Al_2O_3$ or $SiO_2$), slicing the wafer by means of a diamond wheel, forming a magnetic head circuit on the insulating film by sputtering, slicing and assembling into a magnetic head. When using a ceramic composition containing zirconia as a predominant component according to the present invention, chipping hardly takes place during slicing and thin film magnetic heads can be produced with high yield.

The accompanying drawings illustrate examples wherein:

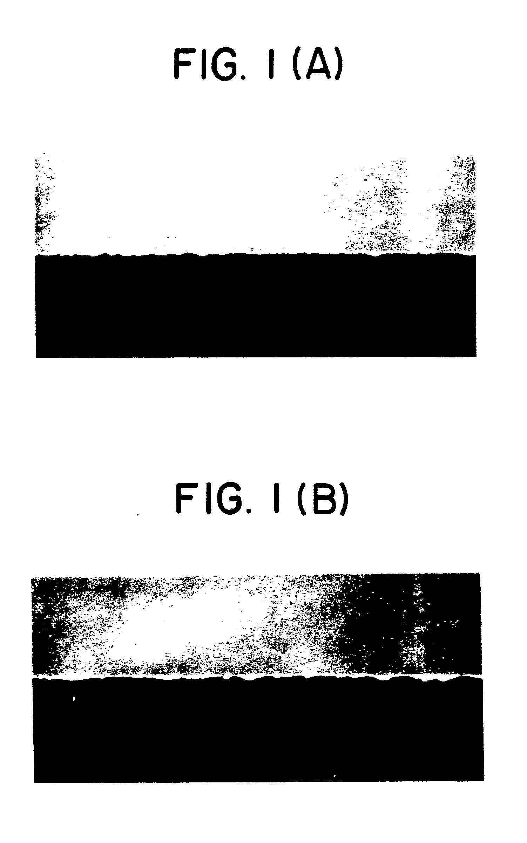

Figure 1(A) is a microphotograph showing the chipping state of a sliced surface in the ceramic substrate; and

Figure 1 (B) is a microphotograph showing the same of a commercially available $Al_2O_3$-TiC compact for comparison.

EXAMPLE 1

A coprecipitated powder of $ZrO_2$-3 mol % $Y_2O_3$ was mixed with 21% by weight (25% by volume) of TiC powder with a mean grain size of $0.1\mu$ (as measured by a microscope) and hot-pressed at 1500°C and 300 kg/cm² for 1 hour to obtain a zirconia compact with a theoretical density ratio of 100% and a mean grain size of $0.5\mu$.

The resulting compact and a commercially available $Al_2O_3$-TiC compact were machined into wafers, polished to give a surface roughness of 100 Å, coated with $Al_2O_3$ in a thickness of $10\mu$ by vapour deposition and then subjected to slicing using a diamond wheel. Consequently, it was found that the zirconia compact had few voids as defects on the wafer surface after polishing and exhibited an excellent smoothness. As to the chipping of the edges by slicing, the zirconia compact showed 1 and $Al_2O_3$-TiC compact for comparison showed about 10, represented by a relative value of existence density of chippings of at least $10\mu$ occurring on the sliced surface. Figure 1 (A) and Figure 1 (B) show respectively the states of both the compacts after slicing.

The zirconia compact wafer was provided with a magnetic head circuit by patterning, sliced and then assembled into a flying disc head which was then subjected to assessment of the characteristics as a magnetic head, while the comparative sample was similarly treated. The results obtained are shown under samples (1) and (10) respectively in Table 1.

EXAMPLE 2

$ZrO_2$ powder and a dispersion phase component powder with a composition as shown in each of Examples (2) to (9) in Table 1 were charged in an $Al_2O_3$ pot using $Al_2O_3$ balls with water, mixed and ground by a wet process for 72 hours. The resulting slurry was dried and sintered at 1600°C and 300 kg/cm² for 2 hours by a vacuum hot press. A sample was cut out of the thus resulting compact and then subjected to assessments of the transverse rupture strength, electroconductivity, hardness, smoothness of lapping surface, number of chippings occurring during slicing by a diamond wheel and crystalline systems. The various samples were thus treated to give results shown in Table 1. For comparison, the commercially available $Al_2O_3$-TiC substrate (Sample No. 10) was treated in the similar manner to give the results shown in Table 1.

Table 1

| Sample No. | Composition Stabilizer* | Dispersed Phase** | Transverse Rupture Strength $(kg/cm^2)$ | Electro-conductivity $(\Omega^{-1}cm^{-1})$ | Characteristics Hardness (HRA) | Lapping Surface:* | Slicing Property:: | Crystalline Form I | II | III |
|---|---|---|---|---|---|---|---|---|---|---|
| 1 | $3Y_2O_3$ | 25TiC | 150 | 10 | 92.0 | 2 | 2 | 5 | 95 | 0 |
| 2 | 8MgO | 25TiC | 75 | 10 | 91.5 | 5 | 4 | 10 | 50 | 40 |
| 3 | 10CaO | 25TiC | 70 | 10 | 91.5 | 5 | 6 | 15 | 50 | 35 |
| 4 | $3Y_2O_3$ | 6TiC | 150 | $10^{-6}$ | 92.0 | 1 | 3 | 5 | 90 | 5 |
| 5 | $3Y_2O_3$ | 30TiN | 140 | $10^2$ | 93.0 | 4 | 6 | 5 | 80 | 15 |
| 6 | $3Y_2O_3$ | 30ZrN | 130 | 10 | 92.0 | 10 | 6 | 5 | 40 | 55 |
| 7 | $3Y_2O_3$ | $30TiC_{0.5}O_{0.5}$ | 130 | $10^{-2}$ | 93.5 | 10 | 3 | 5 | 85 | 10 |
| 8 | $3Y_2O_3$ | 55TiC | 80 | $10^4$ | 95.0 | 50 | 100 | 15 | 70 | 15 |
| 9 | $3Y_2O_3$ | 3TiC | 140 | $10^{-10}$ | 90.0 | 2 | 5 | 5 | 90 | 5 |
| 10 | $Al_2O_3$-25TiC | | 85 | 1.0 | 93.5 | 10 | 10 | | | |

EP 0 153 141 B1

```
Note:    *    mole ratio of stabiliser contained in
              ZrO₂ starting material
         **   vol % of dispersed phase (hard phase)
              contained in compact (calculated from
              density of ZrO₂ and dispersed phase)
         **   number of voids observed by scanning
          *   electron microscope based on a value
              of 10 for Al₂O₃-TiC
         **   number of chippings or cracks after
         **   slicing based on a value of
              10 for Al₂O₃-TiC
         Crystalline Form I  =  monoclinic
                         II  =  tetragonal
                        III  =  cubic
         Sample No. 10       :  Comparison
```

EXAMPLE 3

According to the invention the procedure of Example 1 was repeated except using, as the hard phase, $Ti_{0.5}W_{0.5}C$, $TiC_{0.5}N_{0.5}$, $TiO_{0.3}N_{0.7}$ and $TiC_{0.5}N_{0.2}O_{0.3}$ instead of TiC and subjected to a similar assessment, thus obtaining the results shown in Table 2. It wad found that the use of these hard phases was effective.

Table 2

| Sample No. | Hard Phase | Transverse Rupture Strength ($kg/mm^2$) | Electro-conductivity ($\Omega^{-1} cm^{-1}$) | Hardness HRA | Lapping Surface | Slicing Property |
|---|---|---|---|---|---|---|
| 11 | $Ti_{0.5}W_{0.5}C$ | 150 | 10 | 92.5 | 2 | 2 |
| 12 | $TiC_{0.5}N_{0.5}$ | 150 | 10 | 92.5 | 3 | 3 |
| 13 | $TiO_{0.3}N_{0.7}$ | 150 | 1 | 92.5 | 3 | 3 |
| 14 | $TiC_{0.5}N_{0.2}O_{0.3}$ | 150 | 1 | 92.5 | 3 | 2 |

EXAMPLE 4

The sintered compacts obtained in Example 2 were worked into thin film magnetic heads and practically used as a flying disc head. Consequently, it was found that the performance of these thin film

6

magnetic heads favourably compared with that using the $Al_2O_3$-TiC substrate of the prior art.

EXAMPLE 5

The procedure of Example 1 was repeated, omitting TiC; a thin film magnetic head with a similarly good performance was obtained.

**Claims**

1. A thin film magnetic head having a substrate consisting of a ceramic compact comprising 4 to 45% by volume of component A, 55 to 96% by volume of component B and at most 3% by volume of unavoidable impurities, wherein component A is at least one of, or a mixture or solid solution consisting of more than one of, a carbide, a nitride, a carbonitride, a carboxide, an oxynitride or a carboxynitrides of an element in Group IVa, Va or VIa elements of the Periodic Table, and component B is zirconia consisting of at least 70% by weight of tetragonal and/or cubic structure, at least one member from the group consisting of oxides of Group IIIa elements of the Periodic Table and mixtures thereof being dissolved to form a solid solution with the zirconia.

**Revendications**

1. Tête magnétique à film mince comportant un substrat composé d'un compact de céramique comprenant 4 à 45 % en volume d'un composant A, 55 à 96 % en volume d'un composant B et au plus 3 % en volume d'impuretés inévitables, dans lequel le composant A est au moins l'un, ou un mélange ou une solution solide constitué de plus d'un carbure, d'un nitrure, d'un carbonitrure, d'un carboxyde, d'un oxynitrure ou d'un carboxynitrure d'un élément du groupe IVa ou un élément du tableau périodique des éléments du groupe Va ou VIa, et dans lequel le composant B est un zircone composé d'au moins 70 % en poids d'une structure quadratique et/ou cubique, au moins un élément choisi dans le groupe constitué d'oxyde des éléments du tableau périodique des éléments du groupe IIIa et de leurs mélanges étant dissous pour former une solution solide avec le zircone.

**Patentansprüche**

1. Dünnfilm-Magnetkopf mit einem Substrat, das aus einem Keramikpressling besteht, der 4 bis 45 Volumen-% einer Komponente A, 55 bis 96 Volumen-% einer Komponente B und höchstens 3 Volumen-% nicht vermeidbarer Verunreinigungen umfaßt, worin Komponente A wenigstens eine Verbindung oder eine Mischung oder eine aus mehr als einer Verbindung bestehende feste Lösung aus der Gruppe Carbid, Nitrid, Carbonitrid, Carboxid, Oxynitrid oder Carboxynitride eines Elements aus der Gruppe der Elemente der Gruppe IV a, V a oder VI a des Periodensystems ist und Komponente B Zirkonoxid ist, das aus wenigstens 70 Gew.-% Zirkonoxid tetragonaler und/oder kubischer Struktur besteht, wobei wenigstens eine Verbindung aus der aus Oxiden der Elemente der Gruppe III a des Periodensystems bestehenden Gruppe und deren Mischungen unter Bildung einer festen Lösung mit dem Zirkonoxid gelöst sind.

# FIG. I (A)

# FIG. I (B)